# FASCICULE DE BREVET EUROPEEN

(11) **EP 2 327 595 B1**
(45) Date de publication et mention de la délivrance du brevet: **18.07.2012**
(21) Numéro de dépôt: 10192251.6
(22) Date de dépôt: 23.11.2010
(51) Int. Cl.: B60T 1/10, B60T 13/58

(54) **Procédé de gestion du freinage d'un aéronef et système de freinage correspondant**
Flugzeugbremssteuerverfahren und Flugzeugbremssteuersystem
Aircraft brake management method and -system

(30) Priorité: 30.11.2009 FR 0905746
(43) Date de publication de la demande: 01.06.2011
(73) Titulaire: Messier-Bugatti-Dowty, 78140 Velizy Villacoublay (FR)
(72) Inventeur: Sorin, Anthony, 78000, Vesrailles (FR); Lemay, David, 92370, Chaville (FR); Basset, Michel, 68990, Heimsbrunn (FR); Chamaillard, Yann, 45130, Le Bardon (FR)
(74) Mandataire: Parzy, Benjamin Alain

(56) Documents cités:
- EP-A1- 1 867 567
- US-A1- 2005 224 642

## Description

L'invention concerne un procédé de gestion du freinage d'un aéronef et le système de freinage correspondant.

### ARRIERE-PLAN DE L'INVENTION

Il est connu de longue date de freiner des roues d'aéronefs au moyen d'un frein à friction comportant un certain nombre d'éléments de friction notamment des disques statoriques et rotoriques. Il a été proposé d'équiper de telles roues freinées d'un organe auxiliaire assurant une dissipation d'énergie par d'autres moyens que la friction, par exemple un organe électromagnétique ou hydraulique. Ces organes auxiliaires dissipent l'énergie cinétique de l'aéronef en produisant une énergie électrique ou hydraulique qui peut être récupérée. Cette production d'énergie récupérable s'accompagne d'un freinage supplémentaire de la roue, qui peut être exploité pour diminuer l'usure des éléments de friction du frein à friction.

EP 1 867 567 décrit la technique le plus proche, sans determiner la situation de freinage récupération/friction.

### OBJET DE L'INVENTION

Le but de l'invention et de proposer un procédé de gestion du freinage d'un aéronef et le système de freinage correspondant pour minimiser l'usure des éléments de friction.

### BREVE DESCRIPTION DE L'INVENTION

En vue de la réalisation de ce but on propose selon l'invention un Procédé de gestion du freinage d'un aéronef comportant des atterrisseurs ayant des roues équipées de freins à friction et de freins auxiliaires assurant une dissipation d'énergie par d'autres moyens que la friction, le procédé comportant les étapes de :
- lors d'une demande de freinage, tester des paramètres de freinage pour déterminer si l'aéronef est dans une situation de freinage pour laquelle les freins à friction ne sont pas indispensables pour assurer le freinage demandé,
- effectuer le freinage demandé en privilégiant un actionnement des freins auxiliaires tant que l'aéronef reste dans ladite situation de freinage, en n'actionnant les freins à friction que si l'aéronef sort de ladite situation de freinage.

La situation de freinage mentionnée correspond typiquement à des situations de manoeuvres au sol pendant lesquelles il est rarement indispensable d'utiliser les freins à friction, les freins auxiliaires sont largement utilisés en remplacement des freins à friction de sorte que l'usure des éléments de friction est minimisée.

Plus précisément, et selon un mode de mise en oeuvre non limitatif du procédé de l'invention, la situation de freinage correspond à des conditions dans lesquelles le couple de freinage demandé est inférieur à un couple maximum développable par les freins auxiliaires, la température des freins auxiliaires est inférieure à un seuil de température admissible, et aucun appui profond et rapides des pédales de freinage n'est détecté.

### BREVE DESCRIPTION DES DESSINS

D'autres caractéristiques et avantages de l'invention apparaîtront à la lecture de la description qui suit d'un mode de mise en oeuvre particulier non limitatif du procédé selon l'invention en référence aux figures ci-jointes parmi lesquelles :
- la figure 1 est un schéma synoptique illustrant de façon générale le procédé selon l'invention et le système de freinage correspondant,
- la figure 2 est un algorithme d'un mode de mise en oeuvre particulier du procédé selon l'invention.

### DESCRIPTION DETAILLEE DE L'INVENTION

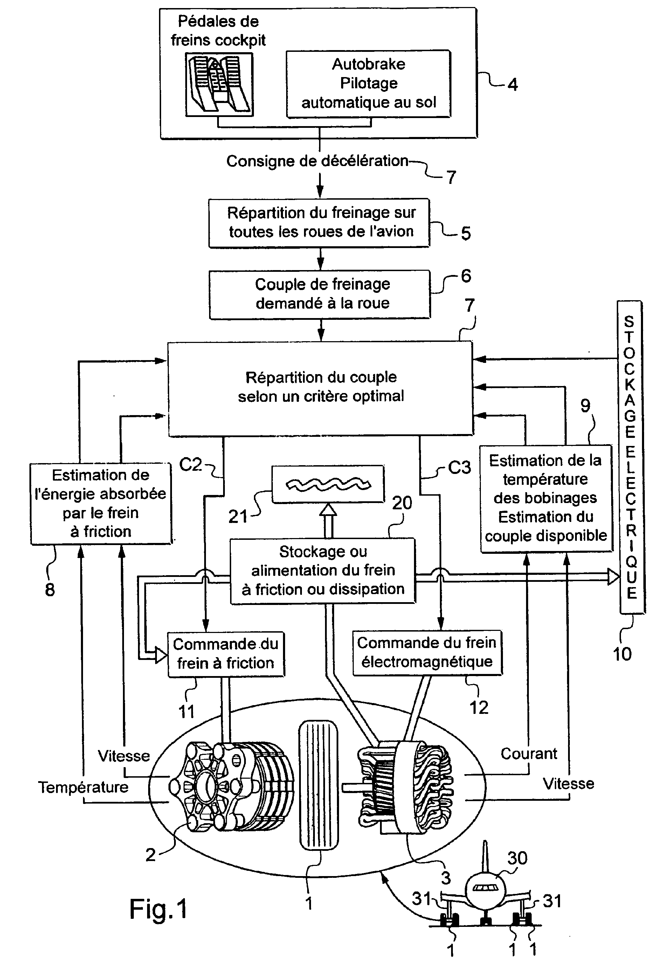

En référence à la figure 1, sur laquelle les liaisons de commande ou de mesure ont été illustrées par une ligne en trait fin et les liaisons de puissance ont été représentées par une ligne en trait double, le système de freinage est porté par un aéronef 30 comportant des atterrisseurs 31 ayant des roues 1 dont une seule a été représentée en détail sur la figure. Dans le mode de réalisation illustré, les roues 1 sont équipées d'un frein à friction 2, ici à actionnement électrique, et d'un frein auxiliaire 3, ici de type électromagnétique.

Par ailleurs le système de freinage comporte un organe générateur de consigne 4 tel qu'une pédale de frein ou un organe de pilotage automatique au sol pour générer une consigne de décélération 7. Le générateur de consigne de décélération 4 est relié à un organe de répartition du freinage sur toutes les roues de l'avion en fonction de la configuration de chacune des roues et des organes de freinage associés de façon à générer un signal de couple de freinage demandé 6 pour chaque roue.

Le signal de couple de freinage demandé 6 est traité par une unité de gestion 7 assurant la répartition du couple entre le frein à friction 2 et le frein auxiliaire 3 selon un critère optimal. À cet effet l'unité de gestion 7 est reliée à un organe 8 d'estimation de l'énergie absorbée par le frein à friction, cet organe d'estimation recevant du frein à friction des informations de température et de vitesse. L'unité de gestion 7 est également reliée à un organe 9 d'estimation de la température des bobinages du frein auxiliaire 3 et d'estimation du couple disponible sur le frein auxiliaire 3, cet organe d'estimation 9 recevant du frein électromagnétique 3 des signaux de courant et de vitesse. L'unité de gestion 7 est en outre reliée à un organe de stockage électrique 10 qui transmet à l'unité de gestion 7 un état de stockage électrique.

À partir de ces informations, l'unité de gestion 7 génère un signal de couple C2 demandé au frein à friction 2 qui est transmis à un organe de commande 11 du frein à friction, et un signal de couple C3 demandé au frein auxiliaire 3 qui est transmis à un organe de commande 12 du frein auxiliaire.

Les signaux de couple demandé C2,C3 sont élaborés par l'unité de gestion 7 en détectant à partir des informations reçues les conditions de freinage dans lesquelles les freins à friction 2 ne sont pas indispensables pour assurer le freinage demandé, et en privilégiant un actionnement du frein auxiliaire 3 tant que les paramètres de freinage restent dans lesdites conditions de freinage. En particulier l'unité de gestion 7 prend en compte le type de freinage demandé par le pilote, le couple de freinage électromagnétique disponible, la température des bobinages, l'usure des disques de friction (qui est elle-même fonction de la température, du nombre de coups de frein, de l'énergie absorbée...), et l'état du dispositif de stockage électrique et des résistances de dissipation 21 associées au frein électromagnétique 3.

L'organe de commande 11 du frein à friction 2 élabore un signal de puissance qui est transmis aux actionneurs du frein à friction 2. L'organe de commande 12 élabore un signal de puissance qui est transmis au frein électromagnétique 3 et à un organe de répartition 20 de l'énergie produite par le frein auxiliaire 3 afin de répartir celle-ci entre l'alimentation des actionneurs électriques du frein à friction 2, le stockage dans l'organe de stockage électrique 10, et une dissipation dans les résistances de dissipation d'énergie 21.

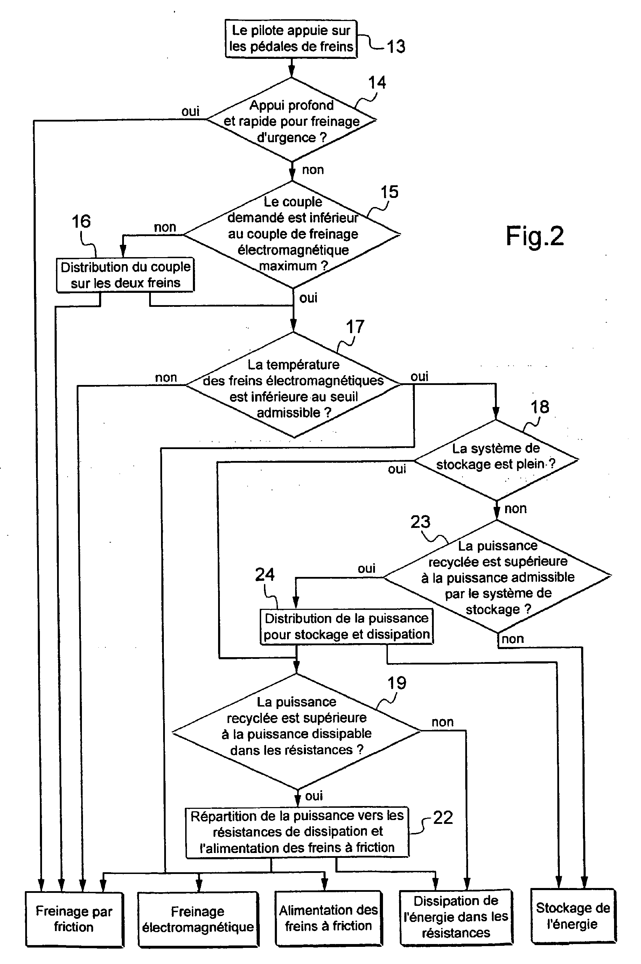

La figure 2 illustre un algorithme particulier non limitatif pouvant servir à configurer l'unité de gestion 7. Le point de départ de cet algorithme est l'appui 13 exercé par le pilote sur les pédales de frein. Un test 14 vérifie si l'appui est profond et rapide pour un freinage d'urgence. Si la réponse est positive le frein à friction 2 est actionné de façon exclusive. Si la réponse est négative un test 15 vérifie si le couple demandé est inférieur au couple de freinage maximum développable par le frein auxiliaire 3. Si la réponse au test 15 est négative le couple demandé fait l'objet d'une distribution 16 entre les deux freins 2,3. Ainsi, le couple qui sera développé par le frein auxiliaire 3 correspond soit à la totalité du couple demandé, soit, si ce couple dépasse le couple de freinage maximum développable par le frein auxiliaire 3, la portion du couple demandé développable par le frein auxiliaire 3.

Cependant, le frein auxiliaire 3 ne sera sollicité que si sa température est inférieure à un seuil de température admissible, afin de protéger le frein auxiliaire 3. C'est l'objet du test 17. Lorsque la réponse au test 17 est positive, le frein auxiliaire 3 reçoit le signal de commande du frein auxiliaire 3 qui assure le freinage correspondant. Si la réponse au test 17 est négative, le signal de commande du frein auxiliaire 3 est transformé en un signal de commande du frein à friction 2, qui assure donc la totalité du freinage.

Ainsi, les divers tests décrits servent à détecter une situation de freinage dans lesquelles l'action du frein à friction 2 n'est pas indispensable, le seul frein auxiliaire pouvant assurer le freinage. Ici, la situation de freinage correspond aux conditions suivantes :
- absence d'appui profond et rapide sur les pédales,
- couple demandé inférieur à un couple de freinage maximum développable par le frein auxiliaire 3
- température du frein auxiliaire inférieure au seuil de température admissible.

Ce n'est que si l'on sort de cette situation de freinage que le frein à friction sera sollicité, soit en complément du frein auxiliaire 3 (couple demandé supérieur au couple de freinage maximum développable par le frein auxiliaire 3, mais température du frein auxiliaire inférieure au seuil de température), soit pour assurer le freinage en totalité (température du frein auxiliaire supérieure au seuil de température admissible, ou appui profond et rapide sur les pédales).

Il est à noter que lorsque la réponse au test 17 est positive, et donc que le frein auxiliaire 3 est sollicité, un test 18 est simultanément effectué pour vérifier si le système de stockage d'énergie électrique 10 généré par le frein auxiliaire 3 est plein. Lorsque la réponse au test 18 est positive, un test 19 est effectué pour vérifier si la puissance recyclée est dissipable dans les résistances. Lorsque la réponse est positive, une répartition 22 est effectuée entre une alimentation des freins à friction et une dissipation de l'énergie dans les résistances 21. Lorsque la réponse est négative la puissance est exclusivement dissipée dans les résistances 21.

Lorsque que la réponse au test 18 est négative, un test 23 est effectué pour vérifier et si la puissance recyclée est supérieure à la puissance admissible par le système de stockage. Si la réponse est positive une distribution 24 de la puissance est effectuée entre le stockage d'énergie et la dissipation de l'énergie dans les résistances 21, la partie de puissance dissipée dans les résistances étant soumise au test 19 avec les conséquences définies ci-dessus.

Bien entendu l'invention n'est pas limitée aux modes de mise en oeuvre décrits et on peut y apporter des variantes de réalisation sans sortir du cadre de l'invention tel que défini par les revendications. En particulier, bien que le procédé de l'invention soit ici appliqué à la gestion du freinage une roue équipée simultanément d'un frein à friction et d'un frein électromagnétique, le même procédé pourra être appliqué plus généralement au freinage d'un groupe de roues, pour lesquelles il n'est pas nécessaire de prévoir un frein auxiliaire sur toutes les roues.

Le frein électromagnétique illustré peut-être remplacé à un autre frein assurant une dissipation d'énergie par d'autres moyens que la friction, par exemple un frein hydraulique alimentant des réservoirs hydrauliques sous pression lorsqu'il est actionné.

Par ailleurs les conditions de freinage peuvent être déterminées par référence à d'autres paramètres de freinage que le couple de freinage demandé, par exemple les conditions de freinage peuvent être déterminées directement à partir de la consigne de décélération 7.

## Revendications

1. Procédé de gestion du freinage d'un aéronef comportant des atterrisseurs ayant des roues équipées de freins à friction et de freins auxiliaires assurant une dissipation d'énergie par d'autres moyens que la friction, le procédé comportant les étapes de :
- lors d'une demande de freinage, tester des paramètres de freinage pour déterminer si l'aéronef est dans une situation de freinage pour laquelle les freins à friction ne sont pas indispensables pour assurer le freinage demandé,
- effectuer le freinage demandé en privilégiant un actionnement des freins auxiliaires tant que l'aéronef reste dans ladite situation de freinage, en n'actionnant les freins à friction que si l'aéronef sort de ladite situation de freinage.

2. Procédé selon la revendication 1, dans lequel les paramètres de freinage sont choisis dans le groupe comprenant : le couple de freinage demandé, la température des freins auxiliaires, un signal indiquant un appui profond et rapide de pédales de freinage.

3. Procédé selon la revendication 2, dans lequel la situation de freinage correspond à des conditions dans lesquelles le couple de freinage demandé est inférieur à un couple maximum développable par les freins auxiliaires, la température des freins auxiliaires est inférieure à un seuil de température admissible, et aucun appui profond et rapide des pédales de freinage n'est détecté.

4. Procédé selon la revendication 3 comportant l'étape, lorsque le frein auxiliaire est sollicité, d'analyser un état de remplissage de moyens de stockage d'énergie généré par le frein auxiliaire, et de privilégier un stockage de l'énergie tant que les moyens de stockage de l'énergie ne sont pas pleins.

5. Système de freinage d'un aéronef comportant des atterrisseurs ayant des roues (1) équipées de freins à friction (2) et de freins auxiliaires (3) assurant une dissipation d'énergie par d'autres moyens que la friction, **caractérisé en ce qu'**il comporte des moyens (7) pour déterminer si l'aéronef est dans une situation de freinage pour laquelle les freins à friction ne sont pas indispensables pour assurer le freinage demandé, et des moyens pour actionner les freins en privilégiant un actionnement des freins auxiliaires (3) tant que l'aéronef reste dans ladite situation de freinage, en n'actionnant les freins à friction que si l'aéronef sort de ladite situation de freinage.

6. Système de freinage selon la revendication 5 **caractérisé en ce qu'**au moins une roue est équipée simultanément d'un frein à friction (2) et d'un frein auxiliaire (3) .

7. Système de freinage selon la revendication 5 dans lequel les freins à friction (2) sont équipés d'actionneurs électriques et dans lequel les freins auxiliaires (3) sont des freins électromagnétiques.

8. Système de freinage selon la revendication 7, comportant des moyens (24,19,17) pour répartir une énergie électrique générée par les freins électromagnétiques entre des moyens de stockage (10), une alimentation des actionneurs électriques des freins à friction, et des résistances de dissipation (21).

## Claims

1. A method of managing the braking of an aircraft having landing gear with wheels fitted with friction brakes and with auxiliary brakes that enable energy to be dissipated by means other than friction, the method comprising the steps of:
· when braking is requested, testing the braking parameters to determine whether the aircraft is in a braking situation for which the friction brakes are not essential for providing the requested braking; and
· performing the requested braking by giving priority to actuating the auxiliary brakes so long as the aircraft remains within said braking situation, and actuating the friction brakes only if the aircraft departs from said braking situation.

2. A method according to claim 1, wherein the braking parameters are selected from the group comprising:
requested braking torque; auxiliary brake temperature; and a signal indicating that hard and rapid thrust is being applied to the brake pedals.

3. A method according to claim 2, wherein the braking situation corresponds to conditions in which the requested braking torque is less than a maximum torque that can be developed by the auxiliary brake, the temperature of the auxiliary brake is less than an acceptable temperature threshold, and no hard and rapid thrust is detected as being applied to the brake pedals.

4. A method according to claim 3, including the step, when the auxiliary brake is used, of analyzing the filling state of means for storing energy generated by the auxiliary brake, and of giving priority to storing the energy so long as the energy storage means are not full.

5. A braking system for an aircraft including landing gear having wheels (1) fitted with friction brakes (2) and auxiliary brakes (3) capable of dissipating energy by means other than friction, the system being **characterized in that** it includes means (7) for determining whether the aircraft is in a braking situation for which the friction brakes are not essential for providing the requested braking, and means for actuating the brakes by giving priority to actuating the auxiliary brakes (3) so long as the aircraft remains in said braking situation, and for actuating the friction brakes only if the aircraft departs from said braking situation.

6. A braking system according to claim 5, **characterized in that** at least one wheel is fitted simultaneously with a friction brake (2) and with an auxiliary brake (3).

7. A braking system according to claim 5, wherein the friction brakes (2) are fitted with electrical actuators, and wherein the auxiliary brakes (3) are electromagnetic brakes.

8. A braking system according to claim 7, including means (24, 19, 17) for sharing electrical energy generated by the electromagnetic brakes between the storage means (10), a power supply for electrical actuators of the friction brakes, and dissipater resistors (21).

## Patentansprüche

1. Verfahren zur Bremsführung eines Luftfahrzeuges, das Fahrgestelle umfasst, die Räder mit Reibungsbremsen und Hilfsbremsen aufweisen, durch die eine Energiedissipation durch andere Mittel als die Reibung sichergestellt ist, wobei das Verfahren die folgenden Stufen beinhaltet:
- Bei einer Bremsanforderung die Bremsparameter zu testen, um festzustellen, ob sich das Luftfahrzeug in einer Bremssituation befindet, für die die Reibungsbremsen nicht erforderlich sind, um die angeforderte Bremsung sicherzustellen,
- Die anforderte Bremsung zu bewirken, indem eine Betätigung der Hilfsbremsen bevorzugt wird, solange das Luftfahrzeug in der besagten Bremssituation verbleibt, wobei die Reibungsbremsen nur dann betätigt werden, wenn das Luftfahrzeug aus der besagten Bremssituation heraustritt.

2. Verfahren nach Anspruch 1, bei dem die Bremsparameter ausgewählt werden aus der Gruppe, die umfasst: das geforderte Bremsmoment, die Temperatur der Hilfsbremsen, ein Signal, das ein tiefes und schnelles Niedertreten der Bremspedale anzeigt.

3. Verfahren nach Anspruch 2, bei dem die Bremssituation den Bedingungen entspricht, bei denen das geforderte Bremsmoment kleiner ist als ein maximales Moment, das durch die Hilfsbremsen entwickelt werden kann, die Temperatur der Hilfsbremsen unter einem zulässigen Temperaturschwellwert liegt, und kein tiefes und schnelles Niedertreten der Bremspedale registriert wird.

4. Verfahren nach Anspruch 3, umfassend den Schritt, dass, wenn die Hilfsbremse beansprucht wird, ein Auffüllungszustand der Mittel für die Speicherung der durch die Hilfsbremse generierten Energie analysiert wird, und dass eine Energiespeicherung bevorzugt wird, solange die Mittel für die Energiespeicherung nicht aufgefüllt sind.

5. Bremssystem für ein Luftfahrzeug, das Fahrgestelle mit Rädern (1) umfasst, die mit Reibungsbremsen (2) und Hilfsbremsen (3) ausgestattet sind, durch die eine Energiedissipation sichergestellt wird durch andere Mittel als die Reibung, **dadurch gekennzeichnet, dass** es Mittel (7) umfasst, um festzustellen, ob sich das Luftfahrzeug in einer Bremssituation befindet, für die die Reibungsbremsen nicht erforderlich sind, um die anforderte Bremsung sicherzustellen, und Mittel, um die angeforderte Bremsung zu bewirken, indem eine Betätigung der Hilfsbremsen (3) bevorzugt wird, solange das Luftfahrzeug in der besagten Bremssituation verbleibt, wobei die Reibungsbremsen nur dann betätigt werden, wenn das Luftfahrzeug aus der besagten Bremssituation heraustritt.

6. Bremssystem nach Anspruch 5, **dadurch gekennzeichnet, dass** mindestens ein Rad gleichzeitig mit einer Reibungsbremse (2) und einer Hilfsbremse (3) ausgestattet ist.

7. Bremssystem nach Anspruch 5, bei dem die Reibungsbremsen (2) mit elektrischen Stellgliedern ausgestattet sind und die Hilfsbremsen (3) elektromagnetische Bremsen sind.

8. Bremssystem nach Anspruch 7, umfassend Hilfsmittel (24, 19, 17), um eine von den elektromagnetischen Bremsen erzeugte elektrische Energie zwischen Speichermitteln (10), einer Versorgung der elektrischen Stellglieder der Reibungsbremsen und von Verlustwiderständen (21) aufzuteilen.
